(19) Europäisches Patentamt
European Patent Office
Office européen des brevets

(11) **EP 4 435 956 A1**

(12) **EUROPEAN PATENT APPLICATION**

(43) Date of publication:
**25.09.2024 Bulletin 2024/39**

(21) Application number: **24164554.8**

(22) Date of filing: **19.03.2024**

(51) International Patent Classification (IPC):
*H01M 50/451* (2021.01)    *H01M 50/489* (2021.01)

(52) Cooperative Patent Classification (CPC):
**H01M 50/451; H01M 50/489**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.03.2023 KR 20230035915**

(71) Applicants:
• **SK Innovation Co., Ltd.**
**Seoul 03188 (KR)**

• **SK ie technology Co., Ltd.**
**Jongno-gu**
**Seoul**
**03188 (KR)**

(72) Inventors:
• **CHO, Kyu Young**
**34124 Daejeon (KR)**
• **KIM, Yun Bong**
**34124 Daejeon (KR)**
• **OH, Eun Ji**
**34124 Daejeon (KR)**

(74) Representative: **Prüfer & Partner mbB**
**Patentanwälte · Rechtsanwälte**
**Sohnckestraße 12**
**81479 München (DE)**

(54) **SEPARATOR AND ELECTROCHEMICAL DEVICE INCLUDING THE SEPARATOR**

(57)     Provided are a separator and an electrochemical device including the separator. The present exemplary embodiment provides a separator including: a porous substrate; an inorganic particle layer including inorganic particles, disposed on at least one surface of the porous substrate; and an adhesive layer including organic particles in a specified particle shape, disposed on the inorganic particle layer.

FIG. 1

EP 4 435 956 A1

## Description

### TECHNICAL FIELD

The following disclosure relates to a separator and an electrochemical device including the separator. Specifically, the following disclosure relates to a separator having excellent electrode adhesion, anti-blocking properties, and air permeability and an electrochemical device including the separator.

### BACKGROUND

To ensure high temperature stability of a separator, a ceramic coated separator (CCS) having a porous inorganic particle layer formed on one or both surfaces of a porous substrate is used. The ceramic coated separator has excellent heat resistance due to its low heat shrinkage rate at a high temperature, and thus it is applied to a large battery system for electric vehicles (EVs).

However, since a conventional ceramic coated separator has insufficient adhesion to an electrode, the separator and the electrode are separated during a cell assembly process to often cause distortion, deformation, and the like of an electrode assembly. That is, when adhesion between the ceramic coated layer of the separator and the electrode is insufficient as described above, a misalignment problem may occur between the electrode and the separator within a jelly roll during cell stacking. When a stack cell battery having misalignment as described above is operated, a short circuit between electrodes occurs due to occurrence of local resistance by the misalignment or physical damage from continued use, which raises a safety problem such as fire.

Therefore, improvement of adhesion between a ceramic coated separator and an electrode is a problem to be solved in order to improve battery stability.

As one method of improving adhesion between the separator and the electrode, there is a method of forming an adhesive organic layer on an inorganic particle layer of the ceramic coated separator, but air permeability becomes poor by the organic layer, thinning is difficult, adhesion to an electrode is still poor, and a blocking phenomenon in which an adhesive organic layer is released during separator winding occurs. Therefore, there are problems to be solved, such as a decreased ion conductivity of a separator and/or occurrence of thickness deviation during alignment of an electrode assembly to deteriorate battery performance.

[Related Art Documents]

[Patent Documents]

(Patent Document 1) Japanese Patent Registration Publication No. 4414165 (publication date: March 3, 2005)

### SUMMARY

An embodiment of the present disclosure is directed to providing a separator having excellent electrode adhesion, anti-blocking properties, and air permeability, in particular at a small thickness, and is directed to an electrochemical device including the separator.

In one general aspect, a separator includes: a porous substrate; an inorganic particle layer disposed on at least one surface of the porous substrate, in which inorganic particles are connected to each other to form pores between the inorganic particles; and an adhesive layer disposed on the inorganic particle layer, in which organic particles having a plurality of protrusion parts and a plurality of valley parts are connected to each other to form pores.

In an exemplary embodiment, a ratio of an average particle diameter (D50) of the organic particles to an average particle diameter (D50) of the inorganic particles may be 0.5 to 3, preferably 0.5 to 1.5.

In an exemplary embodiment, the organic particles may have the D50 of 0.1 um to 2 um, preferably 0.1 um to 1.5 um.

In an exemplary embodiment, in a particle size distribution of the organic particles, a D10/D90 value may be 0.3 to 0.9.

In an exemplary embodiment, the organic particles may have a glass transition temperature (Tg) of 50 to 90°C.

In an exemplary embodiment, the adhesive layer may have a thickness of more than 0 um and 2 um or less.

In an exemplary embodiment, the separator may have a total thickness of more than 0 um and 20 um or less, preferably more than 0 um and 15 um or less.

In an exemplary embodiment, the organic particles may be secondary particles in which primary particles are aggregated with each other by surface melting to form a plurality of protrusion parts and a plurality of valley parts. Optionally or alternatively the organic particles may be in the form of or are composed of primary particles respectively having a plurality of protrusion parts and a plurality of valley parts on the surface.

In an exemplary embodiment, the adhesive layer may include 70 wt% or more of the organic particles based on the total weight of the adhesive layer.

In an exemplary embodiment, the adhesive layer may include 0.2 to 2.0 g/m$^2$ of the organic particles.

In an exemplary embodiment, the separator may have an electrode adhesive strength of 1.5 gf/15 mm to 4.0 gf/15 mm, the electrode adhesive strength being measured by laminating the separator on a carbon sheet (TOYO Tanso Korea, PF-20HP) having a thickness of 200 μm so that the adhesive layer of the separator faces the carbon sheet, adhering the separator by compression at 80°C, 20 MPa for 30 seconds with a heat press, and peeling off the separator at 180° using universal testing machine (UTM) equipment available from INSTRON in accordance with ASTM D903.

In an exemplary embodiment, the separator may have an amount of change in air permeability ΔG of 50 sec/100 cc or less as measured by the following equation:

$$\triangle G = G_1 - G_2$$

wherein $G_1$ is a Gurley permeability of a separator in which an inorganic particle layer and an adhesive layer are sequentially laminated on both surfaces of a porous substrate, and $G_2$ is a Gurley permeability of the porous substrate itself. The Gurley permeability is measured using a densometer available from Toyoseiki in accordance with the standard of ASTM D 726, and its unit is sec/100 cc.

In an exemplary embodiment, when two sheets of separators are disposed so that the adhesive layers face each other, compressed with a pressure of 7.5 MPa at a temperature of 60°C for 1 hour, and peeled off at 180° in accordance with ASTM D903, the adhesive layers are separated as they are since the adhesive layers are adhered to each other and don't partially or completely peeled off, and blocking is not caused.

In another general aspect, an electrochemical device includes the separator of the exemplary embodiment described above.

In an exemplary embodiment, the electrochemical device is a lithium secondary battery comprising said separator between a positive electrode and a negative electrode.

Other features and aspects will be apparent from the following detailed description, the drawings, and the claims.

## BRIEF DESCRIPTION OF THE DRAWINGS

FIG. 1 is a photograph of a shape of organic particles according to an exemplary embodiment of the present invention observed by a scanning electron microscope (SEM).
FIG. 2 illustrates a shape of the organic particle according to an exemplary embodiment of the present invention.
FIG. 3 is a photograph of an adhesive layer of a separator of Example 1 observed by SEM.
FIG. 4 is a photograph of an adhesive layer of a separator of Comparative Example 1 observed by SEM.
FIG. 5 is a photograph of an adhesive layer of a separator of Comparative Example 2 observed by SEM.
FIG. 6 is a photograph of an adhesive layer of a separator of Comparative Example 3 observed by SEM.

[Detailed Description of Main Elements]

100: Organic particles
10: Protrusion part
20: Valley part

## DETAILED DESCRIPTION OF EMBODIMENTS

Hereinafter, the present disclosure will be described in more detail by the following exemplary embodiments or the examples. However, the following exemplary embodiments of the present invention are only a reference for describing the present disclosure, and the present disclosure is not limited thereto and may be implemented in various forms.

In addition, the singular form used in the specification and claims appended thereto may be intended to include a plural form also, unless otherwise indicated in the context.

In addition, unless particularly described to the contrary, "comprising" any elements will be understood to imply further inclusion of other elements rather than the exclusion of any other elements.

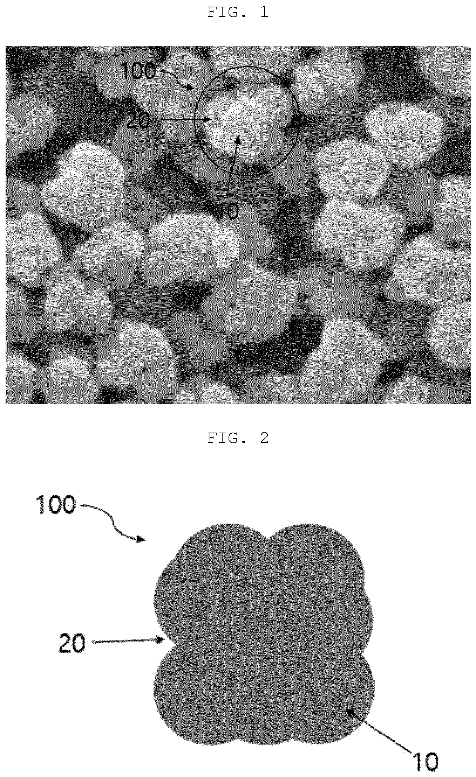

In the present disclosure, an organic particle 100 may be a polymer particle, and as seen in FIGS. 1 and 2, may have a plurality of protrusion parts 10 and a plurality of valley parts 20 formed thereon. As an example, the organic particle may be an aggregate in which a plurality of polymerized primary particles are aggregated with each other by surface melting, that is, a secondary particle. The plurality of protrusion parts 10 and the plurality of valley parts 20 may be formed by aggregating or agglomerating the primary particles. The binder particle in a secondary particle form may refer to a particle form having a plurality of protrusion parts corresponding to a part of the primary particles, in which a valley or a shrunk cavity is formed between the protrusion parts. For example, the binder particle may include a plurality of convex protrusion parts (bump part) in a primary particle form, e.g., 3 or more, 4 or more, 5 or more, 6 or more, or 8 or more convex protrusion parts, and a plurality of valley parts or depression parts formed between the protrusion parts.

Otherwise, the organic particle may be a primary particle having a plurality of protrusion parts and a plurality of valley parts.

The protrusion parts and the valley parts of the organic particle may have irregular sizes and shapes. The term "irregular" refers to substantially not straight, substantially non-uniform, or substantially asymmetrical. The term "protrusion part" refers to a protruded part on the surface of the particle, and is shown as 10 in FIGS. 1 and 2. The "valley or depression part" refers to a concavity on the surface of the particle, refers to a concavity formed by a height difference between the plurality of protrusion parts formed radially from the center of the organic particle or formed between the protrusion parts, and is shown as 20 in FIGS. 1 and 2.

In the present disclosure, "Dn" (n is a real number) refers to a diameter of a particle which is equivalent to n% in terms of a volume-based integrated fraction. For example, "D50" refers to a diameter of a particle which is equivalent to 50% in terms of a volume-based integrated fraction. "D90" refers to a diameter of a particle which is equivalent to 90% in terms of a volume-based integrated fraction. "D10" refers to a diameter of a particle which is equivalent to 10% in terms of a volume-based integrated fraction. The Dn may be derived from the results of a particle size distribution obtained by collecting a sample of particles to be measured in accordance with the standard of ISO 13320-1 and performing analysis using S3500 available from Microtrac which is a particle size analyzer.

The separator of the present disclosure may be, as an embodiment, a separator including: a porous substrate; an inorganic particle layer disposed on at least one surface of the porous substrate, in which inorganic particles are connected to each other to form pores between the inorganic particles; and an adhesive layer disposed on the inorganic particle layer, in which organic particles having a plurality of protrusion parts and a plurality of valley parts are connected to each other to form pores.

Hereinafter, each constituent of the separator will be described in detail.

In an embodiment, the porous substrate may be a polyolefin-based porous substrate such as polyethylene and polypropylene, but is not particularly limited, and all porous substrates known as a porous substrate of a separator of an electrochemical device may be used. In an exemplary embodiment, the porous substrate may be manufactured of a film or sheet, but is not particularly limited. As an example, the porous substrate includes polyolefin such as polyethylene and polypropylene and may use a multilayer of two or more layers.

In an embodiment, the porous substrate may have a thickness of, for example, 1 um or more, 2 um or more, 3 um or more, 4 um or more, 5 um or more, or 6 um or more. The upper limit is not limited, but for example, may be 100 um or less, 50 um or less, 30 um or less, 20 um or less, 15 um or less, 12 um or less, or a value between the numerical values, and unlimitedly, may be 1 to 100 um, or 3 to 50 $\mu$m, 5 to 20 um, or 5 to 15 um for implementing a high capacity battery.

In an embodiment, the inorganic particle layer may include inorganic particles and an organic binder that can connect the inorganic particles to each other, and may be a porous inorganic particle layer in which the inorganic particles are connected and fixed by the organic binder to form pores between the inorganic particles. In an exemplary embodiment, the inorganic particle layer is disposed on one or both surfaces of the porous substrate at an area fraction of 60% or more, 70% or more, 80% or more, or 90% or more based on the entire surface of the porous substrate. In one example, the inorganic particle layer is disposed on one or both surfaces of the porous substrate at an area fraction of 100% except in cases where there are some defects.

In an embodiment, the inorganic particle layer may be disposed on one or both surfaces of the porous substrate, and when the inorganic particle layer is disposed on both surfaces of the porous substrate, the thicknesses of the inorganic particle layer disposed on one surface and the other surface may be the same or different.

In an embodiment, the inorganic particle layer disposed on one surface of the porous substrate may have a thickness of more than 0 um, 0.1 um or more, 0.2 um or more, 0.3 um or more, 0.4 um or more, or 0.5 um or more and 5 um or less, 4 um or less, 3 $\mu$m or less, 2 um or less, or a value between the numerical values. Specifically, the inorganic particle layer may have a thickness of more than 0 um and 5 um or less, 0.1 to 5 $\mu$m, 0.2 to 3 um, or 0.5 to 2 um, but is not limited thereto.

As an embodiment, the inorganic particles are added for improving heat resistance of the separator and the type is not particularly limited. According to a non-limiting example, the inorganic particles may include one or two or more of metal hydroxides, metal oxides, metal nitrides, and metal carbides. As an example, the inorganic particles may include any one or two or more selected from the group consisting of $SiO_2$, SiC, MgO, $Y_2O_3$, $Al_2O_3$, $CeO_2$, CaO, ZnO, $SrTiO_3$, $ZrO_2$, $TiO_2$, AlO(OH), or others, but the disclosed technology is not limited thereto. In order to improve the stability of a battery, the inorganic particles are preferably metal hydroxide particles such as boehmite, pseudo-boehmite, aluminum hydroxide, and magnesium hydroxide, but is not limited thereto.

As an embodiment, when boehmite is used as the inorganic particles, boehmite may have a specific surface area (BET) of 10 $m^2$/g or more or 15 $m^2$/g or more, but is not particularly limited thereto.

In an embodiment, the inorganic particles may have D50 of more than 0 um, 0.05 um or more, 0.1 um or more and 5 um or less, 3 um or less, 2 um or less, 1 um or less, 0.5 um or less, or a value between the numerical values. For example, the D50 may be more than 0 um and 5 um or less, more than 0 um and 3 um or less, 0.05 um or more and 2 um or less, 0.1 um or more and 1 um or less, or 0.1 um or more and 0.5 um or less.

In an embodiment, the type of organic binder of the inorganic particle layer is not limited, as long as the organic binder connects and fixes the inorganic particles so that the inorganic particles are connected to each other to form a porous inorganic particle layer in which a space between the inorganic particles is formed. As an example, the organic binder may be a particle form or a non-particle form, and when it is a particle form, it may be in a particle form which is distinguished from the organic particle having a plurality of protrusion parts and a plurality of valley parts. In addition, the organic binder may be a water-based latex.

An example of the organic binder may include, as a non-limiting example, any one or two or more selected from the group consisting of acryl-based polymers such as polymethylmethacrylate, polybutylacrylate, and polyacrylonitrile; (3-aminopropyl)triethoxysilane, (3-aminopropyl)trimethoxysilane, (3-glycidyloxypropyl)trimethoxysilane, and oligomers thereof, or silane-based compounds prepared therefrom; styrene butadiene rubber; carboxylmethylcellulose (CMC); polyvinylidene fluoride (PVdF); polyvinylprrolidone (PVP); and polyvinylaccetate (PVAc), but is not limited thereto.

A content of the organic binder may be 0.1 to 30 parts by weight, 0.2 to 10 parts by weight, or 0.2 to 5 parts by weight, with respect to 100 parts by weight of the inorganic particles, but is not limited thereto.

The inorganic particle layer only needs to be manufactured by a common manufacturing method of disposing an inorganic particle layer known in the art on a porous substrate, and is not particularly limited. As a non-limiting example, the inorganic particle layer may be formed on the porous substrate by preparing a slurry of inorganic particles and water including an organic binder or an organic solution, and applying the slurry on one or both surfaces of the porous substrate by one of slot die coating, roll coating, spin coating, dip coating, bar coating, die coating, slit coating, and inkjet printing or a combination thereof.

Next, the adhesive layer of the present embodiment and the organic particles forming the adhesive layer will be described in detail.

In the present disclosure, the adhesive layer may be a porous layer. The adhesive layer is formed by applying a composition including the organic particles of the embodiment, such as those illustrated in FIGS. 1 and 2. By including the organic particles in such specific form, (1) the adhesive layer has excellent adhesion to an electrode even in a thin film form, specifically at a thickness of 20 um or less, preferably 10 um or less or more preferably 5 um or less, (2) even after forming the adhesive layer, the increase in transmittance due to the adhesive layer is small as compared to the transmittance of the porous substrate itself, and (3) the adhesive layer does not cause blocking or clogging issues that can occur during battery assembly. In addition, a separator having better adhesion to an electrode as compared to the case of using general spherical organic particles may be provided.

The organic particle may be in the form of a secondary particle in which primary particles are aggregated by melting on the surface. For example, the organic particle in the form of a secondary particle may include a plurality of protrusion parts corresponding to a part of the primary particles and a valley or a shrunk cavity formed between the protrusion parts. And also the organic particle may be a single particle having a plurality of convex protrusion parts and a plurality of valley parts or a plurality of valleys between the protrusion parts.

The organic particle is not particularly limited, but may be an "organic particle in a secondary particle form" having a D50 particle diameter of 0.1 to 1.5 $\mu$m, 0.2 to 1.5 um, or 0.3 to 1 um. A typical form of the binder particle in a secondary particle form may be a particle form in which a plurality of polymerized primary particles are melted with each other, for example, melted on the surface and aggregated, so that the surface of the aggregate is protruded and depressed by the primary particles, as shown in FIG. 1. As another example, the binder particle may be in the form of a single particle in which a plurality of valleys or a plurality of shrunk cavity parts are formed among three or more convex protrusion parts in the single particle. For example, the binder particle may be in the form of a single particle in which 3 or more, 4 or more, 5 or more, or 6 or more convex protrusion parts are formed on the surface of the organic particle and a plurality of valleys or a plurality of shrunk cavity parts are formed between the protrusion parts.

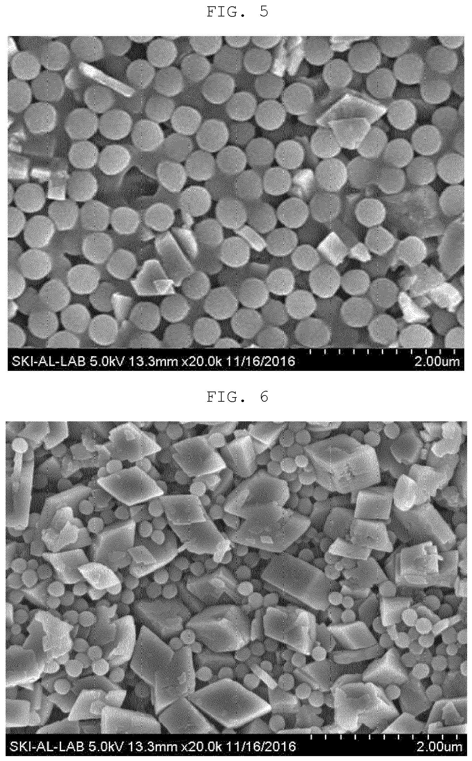

The organic particles of the present invention having the specified shape, and preferably also having the specified size, may significantly improve adhesion to an electrode, air permeability, and anti-blocking properties even in a smaller amount than the organic particle having a spherical shape as in FIG. 5.

In addition, an average particle diameter (D50) of the organic particles is not particularly limited as long as the particle has the above shape, but for example, may be 10 um or less, 5 um or less, 2 um or less, 1 um or less, 0.5 um or less and 0.1 um or more, 0.3 um or more, 0.5 um or more, preferably 0.1 to 10 um, more preferably 0.1 to 2 um, very preferably 0.2 to 1.5 um, and most preferably 0.2 to 1.0 um.

In the range of the average particle diameter, a binding effect with the inorganic particles may be achieved better and adhesive strength with an electrode is significantly improved. In particular, when the organic particles have a size of 0.1 to 1.5 um, a blocking phenomenon in which the adhesive layers block each other during a transfer or lamination process or an adhesive is adhered on other areas in contact with the adhesive layer to release the adhesive layer on the inorganic particle layer is significantly decreased, adhesive strength with an electrode is dramatically increased, and also thinning is possible, which is more preferred.

In an embodiment, as article size distribution of the organic particles, a D10/D90 value may be 0.3 or more, 0.4 or more and 0.9 or less, 0.8 or less, or a value between the numerical values. Otherwise, the D10/D90 value may be 0.3 to 0.9 or 0.4 to 0.8. When the particle size distribution of the organic particles is satisfied, the content of the organic particles for securing electrode adhesive strength may be further decreased, which is thus more advantageous for securing air permeability and anti-blocking properties and preferred, but the present disclosure is not necessarily limited thereto.

In an embodiment, when a ratio of the average particle diameter of the organic particles to the average particle diameter (D50) of the inorganic particles may be 0.5 or more, 0.6 or more, 0.7 or more and 3 or less, 1.7 or less, 1.5 or less, 1.3 or less, 1.0 or less, or a value between the numerical values, and the content of the organic particles introduced to surface irregularities or pores of the inorganic particle layer may be further decreased, which is thus more preferred for securing air permeability and anti-blocking properties, but the present disclosure is not limited thereto. Preferably, the average diameter of the organic particles/ the average diameter of the inorganic particles may be 0.5 to 3, 0.5 to 2, 0.5 to 1.7, 0.5 to 1.5, 0.6 to 1.3, or 0.7 to 1.0.

As an embodiment, the adhesive layer may include 70 wt% or more, 80 wt% or more, 90 wt% or more, 95 wt% or more, 99 wt% or more, or 100% of the organic particles having the specified shape, based on the total weight of the adhesive layer, in order to provide a separator having excellent electrode adhesion, anti-blocking properties, and air permeability even at a small thickness. As the organic particles in the secondary particle form are more contained, it is advantageous to achieve the object of the present disclosure, and thus, the upper limit of the content is not particularly limited.

According to an embodiment, in the separator, the organic particles forming the adhesive layer formed on the inorganic particle layer have a specific form defined above, as shown in FIG. 1, whereby the separator may have excellent physical properties such as relatively significant electrode adhesion, air permeability, and anti-blocking properties, as compared with the separator using organic particles which are the same polymer as the organic particles but have a spherical or circular shape without valleys as shown in FIG. 5. Therefore, the composition of the organic particles of the present invention is not particularly limited, and any composition of organic particles which is commonly used for improving electrode adhesion in the art may be applied.

As a non-limiting example, the organic particles may be prepared of a crosslinked or non-crosslinked particulate acryl-based polymer or fluorinated polymer, or may have a core-shell structure. The particulate acryl-based polymer having a core-shell structure may be obtained by including and polymerizing an acryl-based monomer and other comonomers and a crosslinking agent as required on the surface of crosslinked particles or a core rubber, but is not particularly limited.

The organic particles in the specific form according to the embodiment may significantly improve electrode adhesive strength with a small amount by the structural characteristic, and when they have a glass transition temperature specified below), anti-blocking properties may be further improved, which is thus preferred. In this case, the glass transition temperature (Tg) of the organic particles may be 50°C or higher, 60°C or higher and 90°C or lower, 80°C or lower, 70°C or lower, or a value between the numerical values, and for example, may be 50 to 90°C, 55 to 75°C, or 60 to 70°C, but is not limited thereto.

In an embodiment, the adhesive layer may optionally further include other components known to be added to an electrode adhesive organic layer of a separator in the art, such as a lubricant and a surfactant, in addition to the organic particles, but is not particularly limited thereto.

In an embodiment, the adhesive layer is a porous particle layer in which the organic particles are connected and fixed to each other, may have an area fraction of 60% or more, 70% or more, 80% or more, or 100% based on the entire surface of the inorganic particle layer, and may be laminated at 100% except for unusually occurring defects. In an exemplary embodiment, the porous inorganic particle layer is formed on the porous substrate, and then the porous adhesive layer in the above form - and preferably also in the above specified size - may be laminated on the porous inorganic particle layer to further improve air permeability and ion conductivity of the separator, but the present disclosure is not particularly limited thereto.

In an embodiment, the adhesive layer may have a thickness of more than 0 um, 0.1 um or more, 0.2 um or more, 0.3 um or more and 2 um or less, 1.5 um or less, 1 um or less, 0.9 um or less, 0.7 um or less, or a value between the numerical values, and may have a thickness of more than 0 um and 2 um or less, or 0.1 to 1 um for implementing a high capacity battery.

In an embodiment, a total thickness of the separator in which the inorganic particle layer and the adhesive layer are disposed, respectively, on one or both surfaces of the porous substrate may be 5 um or more, 6 um or more, 7 um or more, 8 um or more, 9 um or more, 10 um or more, 15 um or more, 20 um or more, 30 um or more and 50 um or less, 30 um or less, 20 um or less, 15 um or less, or a value between the numerical values. The total thickness of the separator may be 5 to 50 um, and may be 5 to 25 um or 7 to 20 um for implementing a high capacity battery, but is not particularly limited thereto.

In an embodiment, the content of the organic particles in the adhesive layer may be 0.2 $g/m^2$ or more, 0.5 $g/m^2$ or more, 1 $g/m^2$ or more and 2.0 $g/m^2$ or less, 1 $g/m^2$ or less, 0.5 $g/m^2$ or less, or a value between the numerical values, and preferably, may be 0.2 to 1.0 $g/m^2$.

A method of preparing the organic particles in the specific form is not particularly limited, but in an embodiment, various radical polymerizable monomers such as acryl-based or fluorine-based monomers are polymerized by a polymerization method such as emulsion polymerization and suspension polymerization to prepare a polymerization solution of primary particles, which is sprayed and dried at a high temperature of 200°C to 300°C for several seconds and classified by size, thereby preparing the organic particles in an aggregate form in a secondary particle form, or after emulsion polymerization, vacuum distillation is performed to remove unreacted monomers from polymer particles to form protrusion parts and valley parts, but the present disclosure is not limited thereto.

The adhesive layer may be disposed on the inorganic particle layer using all methods known in the art, and the means is not particularly limited. As a non-limiting example, water is added to the organic particles and stirring is performed to prepare a slurry for an adhesive layer, and the prepared slurry is applied on the inorganic particle layer by one method of slot die coating, roll coating, spin coating, dip coating, bar coating, die coating, slit coating, and inkjet printing or a combined method thereof and dried to dispose the adhesive layer on the inorganic particle layer.

In an embodiment, the separator may have an electrode adhesive strength of 1.5 gf/15 mm or more, 2.0 gf/15 mm or more, 2.3 gf/15 mm or more, 2.5 gf/15 mm or more, or 3.0 gf/15 mm or more, the electrode adhesive strength being measured by laminating the separator on a carbon sheet having a thickness of 200 um so that the adhesive layer of the separator faces the carbon sheet, adhering the separator by compression at 80°C, 20 MPa for 30 seconds with a heat press, and peeling off the separator at 180° using UTM equipment in accordance with ASTM D903. Otherwise, the electrode adhesive strength may be 1.5 gf/15 mm to 4.0 gf/15 mm or 2.0 to 4.0 gf/15 mm.

According to the embodiment, the organic particles having the above form while having a high glass transition temperature simultaneously may be thinly applied in a small amount or well distributed even with an insufficient application area, thereby securing sufficient electrode adhesion even when applied on the inorganic particle layer and also improving anti-blocking properties, which is thus preferred.

For example, when two sheets of separators in which the porous substrate, the inorganic particle layer, and the adhesive layer are sequentially laminated are disposed so that the adhesive layers face each other, compression is performed at a temperature of 60°C and a pressure of 7.5 MPa for 1 hour, and then whether the adhesive layer is partially or completely peeled off upon separation to cause blocking between separator surfaces is confirmed by SEM, excellent anti-blocking properties having no blocking occurrence confirmed may be secured.

The separator of an embodiment may have an amount of change in air permeability ($\triangle G$) represented by the following equation of 50 sec/100 cc or less, 45 sec/100 cc or less, 40 sec/100 cc or less, 35 sec/100 cc or less or, 30 sec/100 cc or less:

$$\triangle G = G_1 - G_2$$

wherein $G_1$ is a Gurley permeability of a separator in which an inorganic particle layer and an adhesive layer are sequentially laminated on both surfaces of a porous substrate, and $G_2$ is a Gurley permeability of the porous substrate itself. The Gurley permeability is measured using a densometer available from Toyoseiki in accordance with the standard of ASTM D 726, and its unit is sec/100 cc.

In the separator according to an embodiment, two or more of electrode adhesion, anti-blocking properties, and air permeability may be excellent, and more preferably, all of electrode adhesion, anti-blocking properties, and air permeability may be excellent.

Another embodiment provides an electrochemical device including the separator. The electrochemical device may be an energy storage device, and though it is not particularly limited, as a non-limiting example, may be a lithium secondary battery. Since the lithium secondary battery is well known and its configuration is also known, it will not described in detail in the present disclosure.

The lithium secondary battery according to one embodiment may include the separator described above between a positive electrode and a negative electrode. Herein, the positive electrode and the negative electrode may be all used without limitation as long as they are commonly used in the lithium secondary battery.

Hereinafter, the present disclosure will be described in more detail, based on the examples and the comparative examples. However, the following examples and the comparative examples are only an example for describing the present disclosure in more detail, and do not limit the present disclosure in any way.

Hereinafter, a method of measuring the physical properties of the separator is as follows.

1. Electrode adhesive strength

Electrode adhesive strength was measured by laminating the separator on a carbon sheet (TOYO Tanso Korea, PF-20HP) having a thickness of 200 um so that the adhesive layer of the separator faces the carbon sheet, adhering the separator by compression at 80°C, 20 MPa for 30 seconds with a heat press, and peeling off the separator at 180° using UTM equipment available from INSTRON in accordance with ASTM D903. When the adhesive strength of the adhesive layer of the separator was too low and even peeling off using UTM equipment was impossible, it was evaluated as "immeasurable".

2. Amount of change in air permeability

Amount of change in air permeability, $\triangle G$ was calculated as follows:

$$\triangle G = G_1 - G_2$$

wherein $G_1$ is a Gurley permeability of a separator in which an inorganic particle layer and an adhesive layer are sequentially laminated on both surfaces of a porous substrate, and $G_2$ is a Gurley permeability of the porous substrate itself. The Gurley permeability was measured according to the standard of ASTM D726, using Densometer available from Toyoseiki, and a time it took for 100 cc of air to pass a separator having an area of 1 square inch was recorded in seconds. The unit was sec/100 cc.

3. Anti-blocking properties

Two sheets of separators in which porous substrate - inorganic particle layer - adhesive layer were laminated were disposed so that the adhesive layers face each other, and compressed with a pressure of 7.5 MPa at a temperature of 60°C for 1 hour. Next, when peeling at 180° was performed in accordance with ASTM D903, it was evaluated whether a phenomenon in which the adhesive layers were adhered to each other and partially or completely peeled off occurred. When the adhesive layers were even partially peeled off, blocking occurred, and when the adhesive layers were separated as they are without a peeling phenomenon, blocking did not occur. It was confirmed by SEM whether blocking occurred. When blocking occurrence was confirmed by SEM, it was evaluated as "NG", and when no blocking occurrence was confirmed, it was evaluated as "OK".

4. Method of measuring average particle diameter

Average particle diameter (D50), D10, and D90 were measured using S3500 available from Microtrac which is a particle size analyzer, in accordance with the ISO 13320-1 standard.

5. glass transition temperature (Tg)

A melting point were measured by heating from at -50° C. to 300° C. at a heating rate of 20° C./min under a nitrogen atmosphere using DSC equipment available from TA (product name: Q200). Here, the measurement was performed by heating twice (1st, 2nd run, and cooling).

6. Thickness (um)

The thickness was measured using a contact type thickness meter having a measurement precision of 0.1 um. The measurement was performed at a measurement pressure of 0.63 N using TESA μ-Hite Electronic Height Gauge available from TESA.

[Example 1]

1) Preparation of composition for adhesive layer

An acryl-based latex (acryl-based latex in which methyl methacrylate and butyl methacrylate are polymerized) having an average particle diameter (D50) of 550 nm and a glass transition temperature (Tg) of 65°C as the organic particles in the form in FIG. 1 was added to water so that the solid content was 5 wt%, and stirring was performed to prepare a uniformly mixed composition for an adhesive layer. At this time, D10/D90 of the organic particles was 0.57.

2) Preparation of slurry for inorganic particle layer

3 parts by weight of an aqueous acryl-based binder (PVP K120, Ashland) and water were mixed with respect to 100 parts by weight of boehmite particles having D50 of 600 nm (Apyral AOH60, Nabaltec) to prepare a slurry having an inorganic particle content of 40 wt%.

3) Manufacture of separator

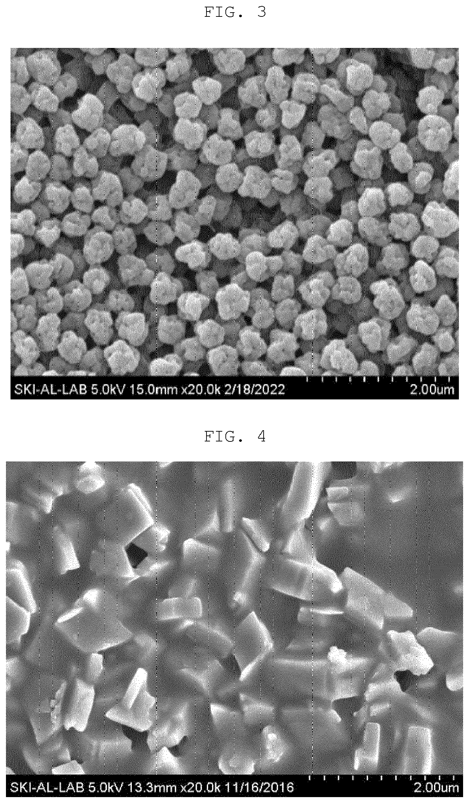

The slurry for an inorganic particle layer was applied on both surfaces of a polyolefin-based porous substrate having a Gurley permeability of 125 sec/100 cc and a thickness of 8.5 um (ENPASS, SK Innovation) using two slot coating dies, and sufficiently dried at 40°C to form an inorganic particle layer. Subsequently, the composition for an adhesive layer was applied on the inorganic particle layer and sufficiently dried at 40°C to form an adhesive layer. The inorganic particle layer of the separator had a thickness of 1.5 um, the adhesive layer had a thickness of 0.5 um, and the separator had a total thickness of 12.5 um. The content of the organic particles in the coated adhesive layer was 0.4 g/m$^2$. The photograph of the surface of the adhesive layer is shown in FIG. 3, and the physical properties are listed in Table 1.

[Example 2]

A separator was manufactured in the same manner as in Example 1, except that D50 was 400 nm during preparation of the composition for an adhesive layer. The results are listed in Table 1.

[Example 3]

A separator was manufactured in the same manner as in Example 1, except that an acryl-based latex having the composition of the organic particles and having D50 of 1.8 um and a glass transition temperature (Tg) of 65°C was coated at the content listed in Table 1. The results are listed in Table 1.

[Example 4]

A separator was manufactured in the same manner as in Example 1, except that an acryl-based latex having the same composition as the organic particles during preparation of the composition for an adhesive layer and having D50 of 1.0 um and a glass transition temperature (Tg) of 62°C was coated at the content listed in Table 1. The results are listed in Table 1.

[Comparative Example 1]

The process was performed in the same manner as in Example 1, except that the acryl-based latex was dissolved in an organic solvent and applied on the inorganic particle layer. The results are shown in FIG. 4 and Table 1.

[Comparative Example 2]

A separator was manufactured in the same manner as in Example 1, except that a spherical acryl-based latex of FIG. 5 having D50 of 540 nm and a glass transition temperature (Tg) of 65°C which was prepared by suspension polymerization using the same monomer as in Example 1 as spherical organic particles without protrusion parts and valley parts in the organic particles of Example 1 was coated at the content listed in Table 1. The results are shown in FIG. 5 and Table 1.

[Comparative Example 3]

A separator was manufactured in the same manner as in Example 1, except that an acryl-based latex having D50 of 200 nm and a glass transition temperature (Tg) of 65°C as spherical organic particles without protrusion parts and valley parts in the organic particles of Example 1 was coated at the content listed in Table 1. The results are shown in FIG. 6 and Table 1.

The results of evaluating the physical properties of the separators manufactured in the examples and the comparative examples were summarized and are shown in Table 1.

[Table 1]

| | Organic particles | | | Average diameter of organic particles/ average diameter of inorganic particles | Electrode adhesive strength (gf/15 mm) | Amount of change in air permeability $\triangle G$ (sec/100cc) | Anti-blocking properties (OK/NG) |
|---|---|---|---|---|---|---|---|
| | D50 (nm) | Tg (°C) | Content (g/m²) | | | | |
| Example 1 | 550 | 65 | 0.4 | 0.92 | 2.7 | 27 | OK |
| Example 2 | 400 | 65 | 0.8 | 0.67 | 2.5 | 33 | OK |
| Example 3 | 1800 | 65 | 0.2 | 3.0 | 2.5 | 19 | NG |
| Example 4 | 1000 | 62 | 0.3 | 1.67 | 2.8 | 22 | OK |
| Comparative Example 1 | 550 | 65 | 0.4 | - | Immeasurable | 86 | OK |
| Comparative Example 2 | 540 | 65 | 0.4 | 0.9 | Immeasurable | 27 | OK |
| Comparative Example 3 | 200 | 65 | 0.8 | 0.33 | Immeasurable | 38 | OK |

Referring to the results of Table 1 and the drawings, it was confirmed that in Examples 1 and 2 in which the adhesive layer was formed of the organic particles in the form of secondary particles including convex protrusion parts on the surface and valley parts interposed between the protrusion parts, as shown in FIG. 3, and the average particle diameter ratio between the organic particles and the inorganic particles was between 0.5 and 1.5 and the size of the average particle diameter of the organic particles was 1.5 um or less, electrode adhesion and anti-blocking properties were the best and the included adhesive layer was formed well on the inorganic particle layer.

In addition, it is shown that Example 4 having the average size of the organic particles of 1 um and the ratio of organic particles/inorganic particles of 1.67 had electrode adhesion and anti-blocking properties which were inferior to Examples 1 and 2 but significantly better than the comparative examples, and Example 3 having the average size of 1.8 um and the ratio of organic particles/inorganic particles of 3 showed inferior anti-blocking properties to Examples 1, 2, and 4, but better adhesion than the comparative examples.

However, Comparative Example 1 using the soluble acryl-based polymer had blocked pores on the surface as shown in FIG. 4 to have poor air permeability, and also had very low electrode adhesive strength. In addition, Comparative Examples 2 and 3 having a spherical adhesive layer had a spherical adhesive layer as shown in FIGS. 5 and 6, and in this case, had poor electrode adhesive strength and very poor anti-blocking properties.

The separator of the present disclosure may have excellent electrode adhesion, anti-blocking properties, or air permeability even at a small thickness.

The separator of an exemplary embodiment may have an electrode adhesive strength of 1.5 gf/15 mm or more, 2.0 gf/15 mm or more, 2.3 gf/15 mm or more, 2.5 gf/15 mm or more, or 3.0 gf/15 mm or more, the electrode adhesive strength being measured by laminating the separator on a carbon sheet having a thickness of 200 um so that the adhesive layer of the separator faces the carbon sheet, adhering the separator by compression at 80°C, 20 MPa for 30 seconds with a heat press, and peeling off the separator at 180° using UTM equipment in accordance with ASTM D903. As an example, the electrode adhesive strength may be 1.5 gf/15 mm to 4.0 gf/15 mm. According to the exemplary embodiment, sufficient electrode adhesion may be secured even when organic particles having a specified shape of particles in which the surface of particles of a polymer having a high glass transition temperature is melted and aggregated are included in a relatively small amount.

The separator of an exemplary embodiment may secure excellent electrode adhesion even at a small thickness and also may have excellent anti-blocking properties. For example, two separators in which porous substrate - inorganic particle layer - adhesive layer are laminated are disposed by lamination so that the adhesive layers face each other, and then compressed with a pressure of 7.5 MPa at a temperature of 60°C for 1 hour. Next, when the adhered part is peeled off and whether the adhesive layer is partially or completely peeled off to cause blocking between separator surfaces is confirmed by SEM, the separator may have excellent blocking prevention performance without causing blocking in which the adhesive layers are partially released from their separators.

As an exemplary embodiment, the separator may have excellent air permeability even with its multilayer structure in which the adhesive layer is disposed on the inorganic particle layer, and an amount of change in air permeability represented by the following equation may be 50 sec/100 cc or less, 40 sec/100 cc or less, 35 sec/100 cc or less, or 30 sec/100 cc or less.

$$\triangle G = G_1 - G_2$$

wherein $G_1$ is a Gurley permeability of a separator in which a heat-resistant adhesive layer is laminated on both surfaces of a porous substrate, and $G_2$ is a Gurley permeability of the porous substrate itself. The Gurley permeability is measured using a densometer available from Toyoseiki in accordance with the standard of ASTM D 726, and its unit is sec/100 cc. In addition, even the separator in which the heat-resistant adhesive layer is laminated on one surface of the porous substrate may satisfy the amount of change in air permeability.

In the separator of an exemplary embodiment, two or more of electrode adhesion, anti-blocking properties, and air permeability may be excellent, and more preferably, all of electrode adhesion, anti-blocking properties, and air permeability may be excellent.

Hereinabove, although the present disclosure has been described by the specific matters and limited exemplary embodiments in the present disclosure, they have been provided only for assisting the entire understanding of the present disclosure, and the present disclosure is not limited to the exemplary embodiments, and various modifications and changes may be made by those skilled in the art to which the present disclosure pertains from the description.

**Claims**

1.    A separator comprising: a porous substrate; an inorganic particle layer disposed on at least one surface of the porous substrate, in which inorganic particles are connected to each other to form pores between the inorganic particles; and an adhesive layer disposed on the inorganic particle layer, in which organic particles having a plurality of protrusion parts and a plurality of valley parts are connected to each other to form pores.

2.    The separator of claim 1, wherein a ratio of an average particle diameter (D50) of the organic particles to an average particle diameter (D50) of the inorganic particles is 0.5 to 3, preferably 0.5 to 1.5.

3.    The separator of claim 1 or 2, wherein the organic particles have the D50 of 0.1 to 2 um, preferably 0.1 to 1.5.

4.    The separator of any one of the preceding claims, wherein a particle size distribution of the organic particles, D10/D90 is 0.3 to 0.9.

5.    The separator of any one of the preceding claims, wherein the organic particles have a glass transition temperature (Tg) of 50 to 90°C.

6.    The separator of any one of the preceding claims, wherein the adhesive layer has a thickness of more than 0 um and 2 um or less.

7.    The separator of any one of the preceding claims, wherein a total thickness of the separator is more than 0 um and 20 um or less, preferably more than 0 um and 15 um or less.

8.    The separator of any one of the preceding claims, wherein the organic particles are at least one of: secondary particles in which primary particles are aggregated with each other by surface melting to form a plurality of protrusion parts and a plurality of valley parts; and/or primary particles having a plurality of protrusion parts and a plurality of valley parts on a surface of the primary particles.

9.    The separator of any one of the preceding claims, wherein the adhesive layer includes 70 wt% or more of the organic particles based on the total weight of the adhesive layer.

10. The separator of any one of the preceding claims, wherein the adhesive layer includes 0.2 to 2.0 g/m$^2$ of the organic particles.

11. The separator of any one of the preceding claims, wherein the separator has an electrode adhesive strength of 1.5 gf/15 mm to 4.0 gf/15 mm, wherein the electrode adhesive strength is measured by laminating the separator on a carbon sheet (TOYO Tanso Korea, PF-20HP) having a thickness of 200 um so that the adhesive layer of the separator faces the carbon sheet, adhering the separator by compression at 80°C, 20 MPa for 30 seconds with a heat press, and peeling off the separator at 180° using UTM equipment available from INSTRON in accordance with ASTM D903.

12. The separator of any one of the preceding claims, wherein the separator has an amount of change in air permeability $\Delta$G of 50 sec/100 cc or less as measured by the following equation:

$$\triangle G = G_1 - G_2$$

wherein $G_1$ is a Gurley permeability of a separator in which an inorganic particle layer and an adhesive layer are sequentially laminated on both surfaces of a porous substrate, and $G_2$ is a Gurley permeability of the porous substrate itself, wherein the Gurley permeability is measured using a densometer available from Toyoseiki in accordance with the standard of ASTM D 726, wherein a unit of the Gurley permeability is sec/100 cc.

13. The separator of any one of the preceding claims, wherein when two sheets of separators are disposed so that the adhesive layers face each other, compressed with a pressure of 7.5 MPa at a temperature of 60°C for 1 hour, and peeled off at 180° in accordance with ASTM D903, the adhesive layers are separated as they are without a phenomenon in which the adhesive layers are adhered to each other and partially or completely peeled off, and blocking is not caused.

14. An electrochemical device comprising the separator of any one of claims 1 to13.

15. The electrochemical device of claim 14, which is a lithium secondary battery comprising said separator between a positive electrode and a negative electrode.

FIG. 1

FIG. 2

FIG. 3

FIG. 4

FIG. 5

SKI-AL-LAB 5.0kV 13.3mm x20.0k 11/16/2016          2.00um

FIG. 6

SKI-AL-LAB 5.0kV 13.3mm x20.0k 11/16/2016          2.00um

Europäisches
Patentamt

European
Patent Office

Office européen
des brevets

# EUROPEAN SEARCH REPORT

**Application Number**

EP 24 16 4554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/243825 A1 (CHOI KYOUNGHWAN [KR] ET AL) 30 July 2020 (2020-07-30)<br>* abstract *<br>* paragraphs [0172] - [0181] *<br>* paragraphs [0052] - [0054] *<br>* figures 1-4, 8-10 *<br>* claims 1-20 * | 1-15 | INV.<br>H01M50/451<br>H01M50/489 |
| X | KR 2022 0070098 A (W SCOPE KOREA CO LTD [KR]; W SCOPE [KR])<br>30 May 2022 (2022-05-30)<br>* abstract *<br>* paragraphs [0027] - [0032] *<br>* paragraphs [0011] - [0023] *<br>* figure 1 *<br>* paragraphs [0037] - [0040] *<br>* claims 1-10 * | 1-15 | |
| X | WO 2022/250256 A1 (W SCOPE KOREA CO LTD [KR]; W SCOPE CHUNGJU PLANT CO LTD [KR])<br>1 December 2022 (2022-12-01)<br>* abstract *<br>* paragraphs [0046] - [0048] *<br>* figures 1-4 *<br>* paragraphs [0051] - [0056] *<br>* claims 1-10 * | 1-15 | TECHNICAL FIELDS SEARCHED (IPC)<br><br>H01M |
| A | US 2020/127264 A1 (KIM GAIN [KR] ET AL) 23 April 2020 (2020-04-23)<br>* abstract *<br>* figures 2-5 *<br>* claims 1-20 * | 1-15 | |

The present search report has been drawn up for all claims

| Place of search | Date of completion of the search | Examiner |
|---|---|---|
| Munich | 8 August 2024 | Stachowiak, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 4554

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2024

| Patent document cited in search report | | Publication date | Patent family member(s) | | Publication date |
|---|---|---|---|---|---|
| US 2020243825 | A1 | 30-07-2020 | KR 20200092099 | A | 03-08-2020 |
| | | | US 2020243825 | A1 | 30-07-2020 |
| KR 20220070098 | A | 30-05-2022 | NONE | | |
| WO 2022250256 | A1 | 01-12-2022 | CN 116918159 | A | 20-10-2023 |
| | | | EP 4277003 | A1 | 15-11-2023 |
| | | | JP 2024506163 | A | 09-02-2024 |
| | | | KR 20220161592 | A | 07-12-2022 |
| | | | US 2023378604 | A1 | 23-11-2023 |
| | | | WO 2022250256 | A1 | 01-12-2022 |
| US 2020127264 | A1 | 23-04-2020 | KR 20190004158 | A | 11-01-2019 |
| | | | US 2020127264 | A1 | 23-04-2020 |
| | | | WO 2019009564 | A1 | 10-01-2019 |

EPO FORM P0459

For more details about this annex : see Official Journal of the European Patent Office, No. 12/82

**EP 4 435 956 A1**

**Patent documents cited in the description**

- JP 4414165 B